# EUROPEAN PATENT APPLICATION

(11) **EP 4 538 635 A1**
(43) Date of publication of application: **16.04.2025**
(21) Application number: 23819452.6
(22) Date of filing: 10.03.2023
(51) Int. Cl.: G01B 11/24

(54) **COMPONENT INSPECTION METHOD AND DEVICE**

(30) Priority: 09.06.2022 JP 2022093398
(71) Applicant: NISSAN MOTOR CO., LTD., Kanagawa 221-0023 (JP)
(72) Inventor: SUMI, Norikatsu, Atsugi-shi, Kanagawa 243-0123 (JP)
(74) Representative: Osha BWB
(86) International application number: PCT/JP2023/009217
(87) International publication number: WO 2023/238465

(57) **Abstract**

In order to inspect the minimum distance between an ignition coil (3) and a fuel tube (4), point group data is generated through scanning by a three-dimensional laser scanner (5) (S1), and reference point group data based on CAD data (S2, S3) is aligned (S4-S14). After the alignment, the measured point group data is interpolated with the reference point group data (S17), and the minimum distance between optional two points is calculated (S19). When reliability degree is low (S15, S16), a loss region is determined (S17) and additional scanning is performed. At that time, a plurality of virtual viewpoints set around the region is evaluated and measurement parameters for a trajectory and the like are calculated so as to connect advantageous points (S23), and an instruction for additional scanning along the trajectory is given (S24).

## Description

### TECHNICAL FIELD

The present invention relates to a clearance inspection method and device for performing inspection related to a spatial arrangement state of one or a plurality of components as targets in an assembly formed by assembling a plurality of components.

### BACKGROUND TECHNOLOGY

For example, in a completed vehicle inspection process for a vehicle, there is a case where an inspector performs inspection of positions of a plurality of components (for example, inspection for clearance between components adjacent to each other) assembled within an engine room, visually or with a ruler. In recent years, attempts have been made to inspect the attachment states or spatial positions of specific components in such an assembly by obtaining three-dimensional data on the outer shape of each of the components through measurement using a three-dimensional sensor (see, for example, patent document 1).

In an assembly in which a plurality of components are assembled three-dimensionally, when measurement is performed from outside with a three-dimensional sensor, a part of a target component may have a so-called loss region where data cannot be obtained because the orientation of the three-dimensional sensor is not suitable or shielding by other components. This loss region is a factor that reduces the accuracy of identifying the shape and position of the component.

The patent document 1 discloses the estimation of three-dimensional position attitude of a target object and object identification by using the loss region as characters but fails to disclose to reduce the loss region further at the time of measurement.

### PRIOR ART REFERENCE(S)

### PATENT DOCUMENT(S)

Patent Document 1: Japanese Patent Application Publication No. 2011-174891

### SUMMARY OF THE INVENTION

The present invention is a component inspection method for performing inspection related to a spatial arrangement state of one or a plurality of components as targets in an assembly formed by assembling a plurality of components, the method including: acquiring a measurement data including a part of an outer surface of the target component by scanning a region including the target component from outside by a three-dimensional sensor; acquiring a design data including an individual outer shape of the target component and a positional relationship of the target component in the assembly; determining a loss region in the measurement data of the target component by comparing it with the design data of the target component; determining a measurement parameter of the three-dimensional sensor which is suitable for acquiring the measurement data of the loss region; and performing additional scanning according to the measurement parameter.

According to the present invention, by determining the measurement parameter of the three-dimensional sensor which is suitable for acquiring the measurement data of the loss region and performing additional scanning accordingly, the loss region can be made smaller and the measurement accuracy which is a prerequisite for inspection of a target component can be improved.

### BRIEF DESCRIPTION OF THE DRAWINGS

FIG. 1 is an illustrative view when various components within an engine room that is an assembly in one embodiment are viewed from the upper side.
FIG. 2 is a functional block diagram of a clearance inspection device in one embodiment.
FIG. 3 is point group data of an engine room and components thereinside scanned by a three-dimensional laser scanner.
FIG. 4 is point group data of the engine room and the components thereinside in a progress degree of 40%.
FIG. 5 is an illustrative view regarding reliability degree.

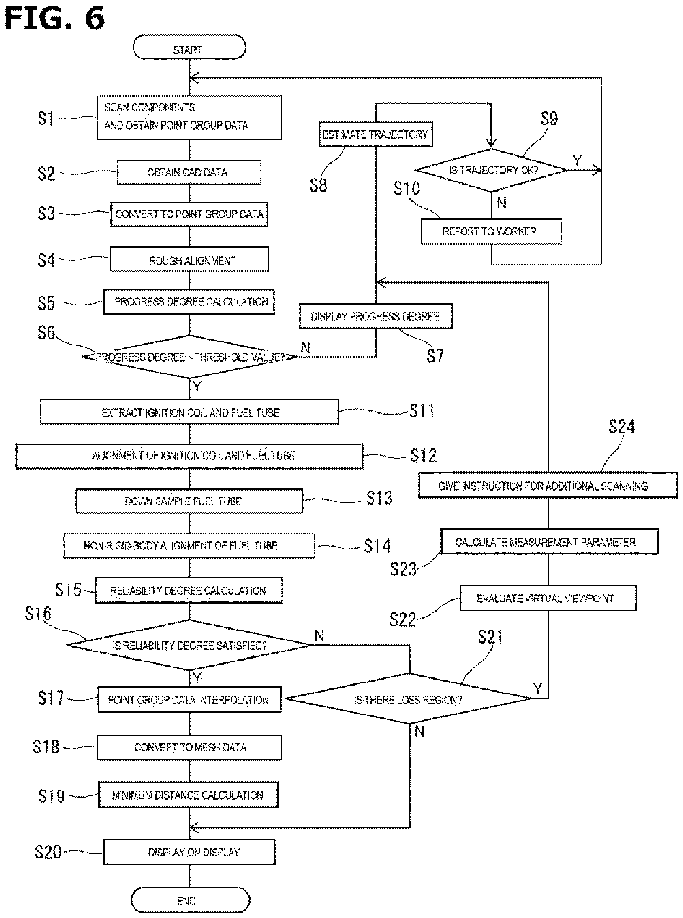

FIG.6 is a flowchart showing the flow of process of a clearance inspection method in one embodiment.
FIG. 7 is an illustrative view of moving trajectory of the three-dimensional sensor at the time of scanning.
FIG. 8 is an illustrative view showing the deviation between the indicated trajectory and the actual moving trajectory during scanning.
FIG. 9 is an illustrative view of additional scanning for a loss region.

### MODE FOR IMPLEMENTING THE INVENTION

In the following, one embodiment of the present invention will be explained by referring to the drawings. The embodiment is one in which the present invention is applied to a clearance inspection for calculating the minimum clearance between two components within an engine room by specifying the spatial positions of the two components in a completed vehicle inspection process of a vehicle.

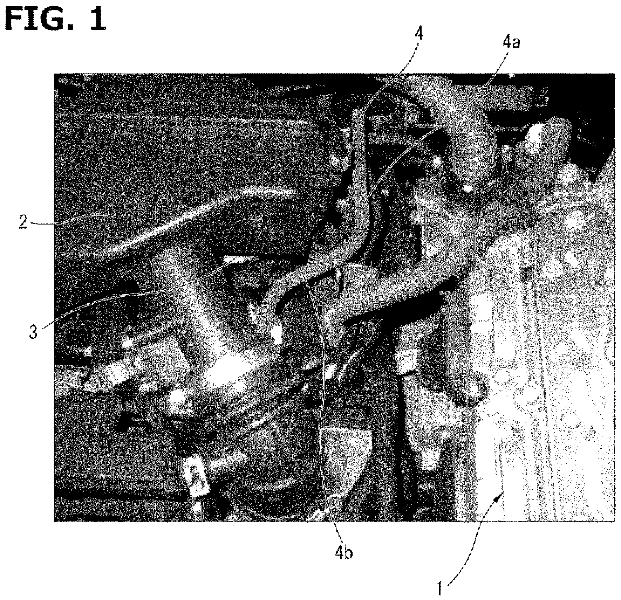

FIG. 1 is a drawing in which part of various components within an engine room 1 of a vehicle that is an assembly in one embodiment is viewed from the upper side, and there is shown a region close to an intake manifold 2 of an engine. An ignition coil 3 that is part of an ignitor of the engine is disposed on the lower side of intake manifold 2. In addition, a fuel tube 4 that is a pipe for supplying fuel to the engine is positioned on the side of intake manifold 2. Fuel tube 4 is formed from a metal tube in consideration of oil resistance and fire resistance, and has a circular shape in cross section along the radial direction. As shown in FIG. 1, fuel tube 4 has a straight section 4a substantially linearly extending along the side portion of intake manifold 2 and an inclination section 4b inclined toward ignition coil 3 from one end of straight section 4a. Fuel tube 4 formed from a metal tube is slightly deformed when being attached, and is therefore a component regarded as a non-rigid body. On the other hand, ignition coil 3 is a component regarded as a rigid body whose outer shape is not changed. The minimum spatial distance (minimum clearance) between ignition coil 3 and fuel tube 4 is defined by a law, and it is therefore necessary to inspect the minimum clearance in a completed vehicle inspection process. Here, in most cases, the minimum design distance between ignition coil 3 and fuel tube 4 is defined at a position of an outer surface that is not confirmed visually from the outside in at least one of ignition coil 3 and fuel tube 4, and the measurement with a ruler by an inspector is generally difficult. In the present embodiment, such a clearance between two components is obtained by the measurement from the outside by using a three-dimensional sensor and arithmetic processing.

In addition, in addition to intake manifold 2, ignition coil 3 and fuel tube 4, a plurality of components are provided within engine room 1. In the completed vehicle inspection process of a vehicle in the present embodiment, in a vehicle formed by assembling a plurality of components including ignition coil 3 that is a component as a rigid body and fuel tube 4 that is a component as a non-rigid body which is formed in consideration of shape deformation, the distance between ignition coil 3 and fuel tube 4 is inspected.

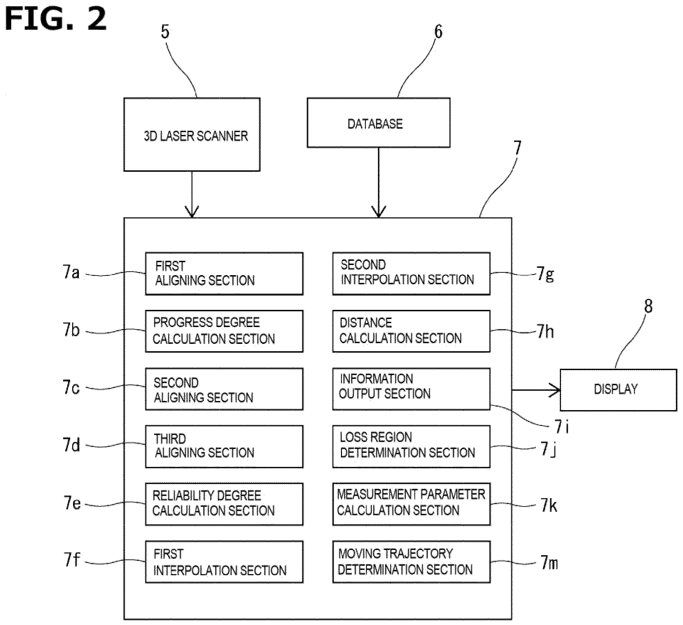

As shown in FIG. 2, the clearance inspection device of one embodiment which is used in completed vehicle inspection of a vehicle is mainly composed of a three-dimensional sensor such as a three-dimensional laser scanner 5, a database 6, a control device 7 and one or a plurality of displays 8. In addition, in the completed vehicle inspection process, a plurality of inspections are sequentially performed according to a predetermined sequence. The clearance inspection device in one embodiment is configured as part of an inspection device in the completed vehicle inspection process.

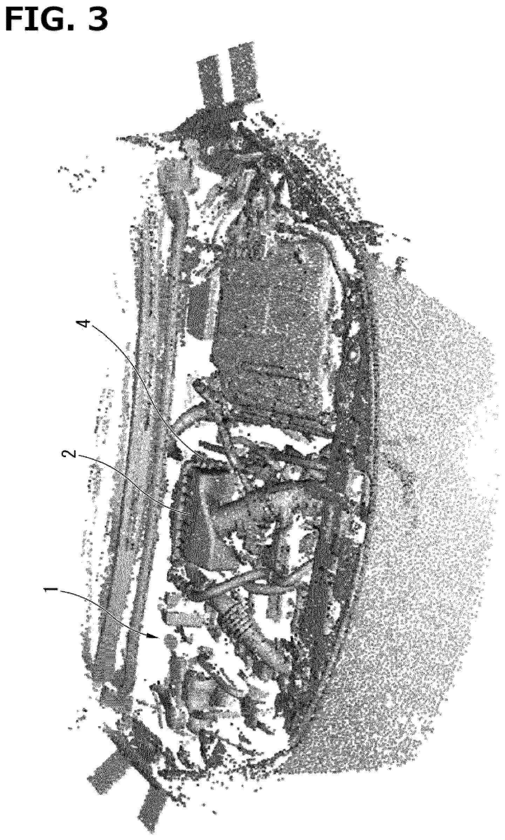

Three-dimensional laser scanner 5 is one which is capable of obtaining a three-dimensional coordinate of the surface shape of a measuring target in a manner that laser is irradiated on the measuring target and a reflection time is measured, and by performing the measurement at a high speed of substantially tens of thousands of points per second, a high-density point group data can be acquired. Although, as a three-dimensional laser scanner, various sizes and types have been known, in one embodiment, a hand-held type which allows a worker to perform scanning of a measuring target is used, and by manually scanning, from the outside, a specific region of engine room 1 including ignition coil 3 and fuel tube 4 together with other components along the indicated moving trajectory, the measurement of a target region is performed. By such scanning performed by three-dimensional laser scanner 5, as shown in FIG. 3, the point group data of the entire region including a part of the outer surfaces of ignition coil 3 and fuel tube 4 can be acquired.

In addition, although the point group data is actually acquired as a time-series data per frame by the scanning, the point group data of the entire region is acquired by being overlapped. In addition, it is preferable to perform a noise removal processing to the acquired point group data for removing noise caused, for example, by dust entered thereto at the time of the scanning. Moreover, the three-dimensional laser scanner may be one which requires a marker to be a standard to recognize a shape and position of a component as a target at the time of scanning.

Here, the "scanning" in the present invention is a concept including one or both of a planar scanning function owned by a three-dimensional sensor (for example, three-dimensional laser scanner 5) itself and movement of the three-dimensional sensor which is performed, for example, by a worker along a certain trajectory. In one embodiment, by using three-dimensional laser scanner 5 having the planar scanning function, and moving the three-dimensional laser scanner 5 along a predetermined trajectory, the scanning is performed. For example, a plurality of three-dimensional sensors are disposed and fixed at proper positions inside a space, and point group data of a target region can also be acquired by the scanning function of each of the three-dimensional sensors, according to the size or shape of the target region to be measured or the type of the three-dimensional sensors.

All design data of a vehicle as an inspection target are stored in database 6. That is, the shape data of ignition coil 3 and the shape data of fuel tube 4 which are targets of the clearance inspection are stored in database 6 as design data together with data indicating the positional relationship of both of them within a space. Moreover, the data of the positional relationship and the data of the shapes of other components existing in the region are also stored in database 6. The design data is stored in database 6 in the form of CAD data constituting mesh. At the time of the clearance inspection, a required design data is read out from database 6 to control device 7. In addition, as to the design data, its data size may be reduced by performing a well-known hidden surface processing to a part other than a part related to the clearance between ignition coil 3 and fuel tube 4, after being read out to control device 7.

Control device 7 is composed of a first aligning section 7a, a progress degree calculation section 7b, a second aligning section 7c, a third aligning section 7d, a reliability degree calculation section 7e, a first interpolation section 7f, a second interpolation section 7g, a distance calculation section 7h, an information output section 7i, a loss region determination section 7j, a measurement parameter calculation section 7k and a moving trajectory determination section 7m. In addition, although not shown in the drawings, as mentioned above, control device 7 includes a measurement data acquisition section configured to acquire the measurement data including part of the outer surface of a target component by scanning using three-dimensional laser scanner 5 and a design data acquisition section configured to acquire, from database 6, the design data including the individual outer shape of the target component and the positional relationship of the component within engine room 1.

First aligning section 7a performs rough alignment of an entire target region (region to be a so-called target in the alignment) including ignition coil 3 and fuel tube 4 in the measurement data acquired by three-dimensional laser scanner 5 with an entire target region (region to be a so-called reference in the alignment) including ignition coil 3 and fuel tube 4 in the design data stored in database 6. For example, first, aligning section 7a searches key points from the point group data of the entire region as a target by using FPFH algorithm, and describes the characters of the key points, such as normal vectors and relative angles around the key points. Moreover, after the design data of the entire region as reference is converted into point group data by using a wall-known conversion technique, first aligning section 7a similarly searches key points using FPFH algorithm and describes the characters of the key points, such as normal vectors and relative angles around the key points. Then, first aligning section 7a compares normal vectors between the key points related to the target and the key points related to the reference and the relative angles with the surrounding point group to search for a combination of key points which constitute a pair whose normal vector and relative angle substantially identical, and then performs rough alignment of the point group data of the reference with the point group data of the target by using the combination of the key points as a pair. In addition, at the time of the rough alignment, fuel tube 4 that is a non-rigid body is regarded as a rigid body, and consequently, an average alignment is performed, for example, within the length of fuel tube 4. The rough alignment of the target region performed by first aligning section 7a is executed together with the scanning of the target region. First aligning section 7a may be one which performs rough alignment of a target region by using well-known algorithm other than FPFH algorithm.

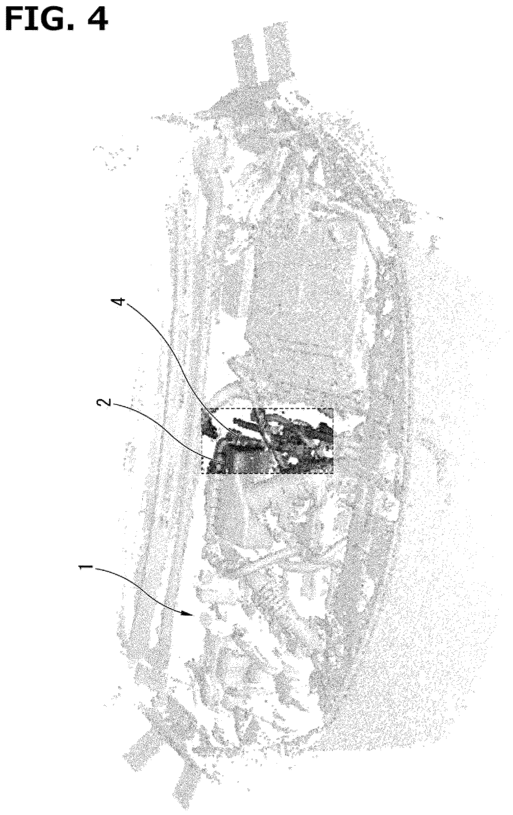

After the rough alignment performed by first aligning section 7a, progress degree calculation section 7b calculates the degree of progress which indicates how much the progress of the scanning required for the target region has been made, before performing the after-mentioned detailed alignment of ignition coil 3 and fuel tube 4. For example, progress degree calculation section 7b calculates the degree of progress of the scanning from the ratio of the number of points of point group data in the target region based on the design data as reference and the number of points of point group data matched to each other between the reference and the target by the rough alignment performed by first aligning section 7a. Moreover, progress degree calculation section 7b determines, by comparing the progress degree calculated in that way with a predetermined progress degree threshold value (for example, 40% in the present embodiment), whether or not a progress degree which gradually increases with the progress of the scanning exceeds the progress degree threshold value, in real time. For example, since the information of the progress degree at that time and the information on whether the progress degree exceeds the progress degree threshold value are displayed on display 8 via information output section 7i, a worker performs to continue the scanning by three-dimensional laser scanner 5 according to the display. In other words, the scanning (generation of point group data) by three-dimensional laser scanner 5, the rough alignment and the progress degree calculation are repeated, in real time, until exceeding a predetermined progress degree threshold value. For example, the region surrounded by a broken line in FIG. 4 corresponds to a progress degree of 40%.

In addition, the progress degree may be evaluated by the number of viewpoints where three-dimensional laser scanner 5 has passed, the number of key points used in the rough alignment or the like, in addition to the ratio of the number of the data mentioned above.

Second aligning section 7c performs detailed alignment in space for each individual components under a condition that the progress degree exceeds the threshold value. That is, second aligning section 7c searches pairs of points in the reference point group data for all points in the target point group data acquired from the measurement of ignition coil 3 and fuel tube 4, and performs detailed alignment of the point group data as reference with the point group data as a target. Fuel tube 4 that is a non-rigid body is regarded as a rigid body here, and an average alignment is performed within the length of fuel tube 4. The detailed alignment by second aligning section 7c can be performed by using a well-known appropriate algorithm.

Third aligning section 7d performs so-called non-rigid-body alignment in consideration of deformation for a component that is a non-rigid body (fuel tube 4 in the present embodiment), after the detailed alignment by second aligning section 7c. Here, although a well-known appropriate algorithm can be used, for example, third aligning section 7d searches a nearest neighbor pair from the point group data of reference and the point group data of a target, which are aligned in advance as a rigid body, and obtains the parameters of rotation, expansion and translation, as parameters for bringing the two points of the pair closer to each other. For example, the outer shape of fuel tube 4 is downsampled to form an outer surface with multiple triangles with vertices and edges, and the vertices representing each point group (cluster) in each downsampled region, i.e., each region containing a plurality of adjacent triangles, with the constraint that the length of the edges does not change (technically, a change in length is minimum), and the deformation of the cluster is decomposed into rotation, expansion and translation parameters. The deformation of entire fuel tube 4 is obtained as a collection of such a deformation in a cluster unit. Third aligning section 7d performs the alignment of the reference point group data for fuel tube 4 with the target point group data in space while deforming the reference point group data for fuel tube 4 by a non-rigid-body aligning method that takes such a deformation into account.

Reliability degree calculation section 7e calculates the degree of reliability to the alignment of each component (that is, ignition coil 3 and fuel tube 4) as a target. In other words, reliability degree calculation section 7e calculates the degree of reliability that indicates how much the target point group data fits in the vicinity of the aligned reference point group data for each of ignition coil 3 and fuel tube 4.

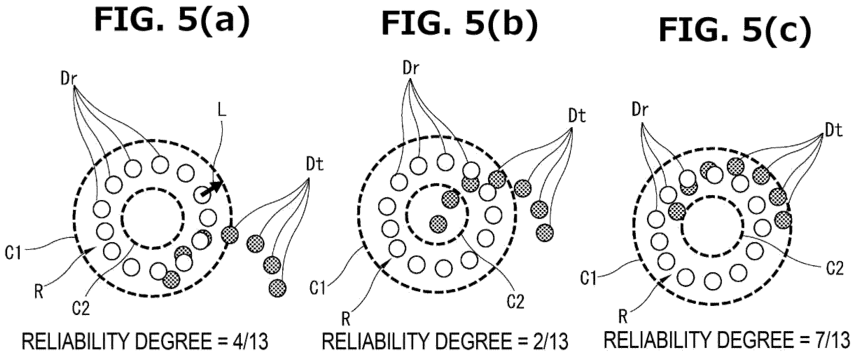

FIG. 5 is an illustrative view schematically showing the point group data of fuel tube 4 after the alignment to explain the degree of reliability. Here, it is assumed that the circular outer surface of fuel tube 4 at a certain cross-section is formed by 13 point group data, in order to simplify the explanation. Thirteen point group data Dr arranged in a circle are reference point group data based on the design data, and seven point group data Dt arranged in a semicircle are the target point group data based on the measurement data. For example, as a result of the performing of the scanning only from the upper side of the drawing by three-dimensional laser scanner 5, the lower half is a so-called loss region, and the target point group data Dt are arranged in a semicircle.

The reliability degree is shown, for example, by the ratio of the number of points of the reference point group data Dr to the number of points of the target point group data Dt included within a range of a radius L from each point of reference point group data Dr. In addition, in the drawing, the range of radius L from a plurality of points of the reference point group data is shown by an outer circle C1 and an inner circle C2 each shown by dashed lines. In the example of FIG. 5(a), four target point group data Dt are included within range R of circles C1 and C2, and the reliability degree is 4/13. In addition, in the example of FIG. 5(b), two point target group data Dt are included within range R of circles C1 and C2, and the reliability degree is 2/13. In the example shown in FIG. 5(c), all of the points of the target, namely, seven point group data Dt are included within range R, and the reliability degree is 7/13. In this way, the reliability degree is affected by both of the accuracy of the alignment and the size or percentage of the deficient region in the measurement data.

First interpolation section 7f interpolates a missing part that is not scanned in the measurement data of ignition coil 3, namely, the point group data of the target, with the point group data of the reference. That is, the outer surface part on the back side (lower side) of ignition coil 3 which is hidden from the view from the upper side of engine room 1 is interpolated with the point group data of the reference, so as to generate point group data of ignition coil 3 which includes the hidden part. Then, first interpolation section 7f converts the generated point group data to mesh data that constitutes a surface using a well-known conversion method.

Similarly, second interpolation section 7g interpolates a missing part that is not scanned in the measurement data of fuel tube 3, namely, the point group data of the target, with the point group data of the reference. That is, the outer surface part on the back side (lower side) of fuel tube 4 which is hidden from the view from the upper side of engine room 1 is interpolated with the point group data of the reference, so as to generate the point group data of fuel tube 4 including the hidden part. Then, second interpolation section 7g converts the generated point group data to mesh data that constitutes a surface using a well-known conversion method.

Distance calculation section 7h calculates the distance from each point on the surface of ignition coil 3 to each point on the surface of fuel tube 4, based on the mesh data of ignition coil 3 acquired by first interpolation section 7f and the mesh data of fuel tube 4 acquired by second interpolation section 7g. Further, distance calculation section 7h obtains the minimum distance by comparing each calculated distance to each other. In addition, distance calculation section 7h may calculate a distance from each point of ignition coil 3 to each point of fuel tube 4, based on each point group data without converting the point group data of ignition coil 3 and the point group data of fuel tube 4 into mesh data.

Information output section 7i generates various images to be displayed on display 8 and data to be output as audio from a speaker which is not shown in the drawings. For example, the minimum distance and the progress degree finally obtained are displayed on one or more displays 8 which is visible by a worker.

Loss region determination section 7j determines a loss part, namely, a loss region in the measurement data for each target component (ignition coil 3 and fuel tube 4). For example, a surface to be scanned in the design data of each of the components is divided into a plurality of grids, and for each of the grids, the percentage of the scanned point group (the ratio of the number of actually scanned points to the number of points to be scanned) is determined, and when this percentage in a grid is less than a predetermined threshold value, its grid is a loss region. Accordingly, it can be obtained that which part is a loss region in the design data of each of the target components.

In addition, a surface part that is not originally a target to scanning (for example, a part that is surrounded by other components and cannot be seen in a straight line) is not a target to determination of a loss region. That is, when the scanning operation is properly performed, the measurement data can be acquired, and a part where the measurement data is missing is a loss region, even if it is a part where the measurement data is scheduled to be acquired.

Measurement parameter calculation section 7k calculates a measurement parameter of the measurement by three-dimensional laser scanner 5 which is required to acquire the measurement data of the loss region for the loss region determined by loss region determination section 7j. The measurement parameter means the position of three-dimensional laser scanner 5 and its orientation direction (in other words, angle), and, in addition, a measurement mode, such as laser intensity, if the measurement mode can be changed. In one embodiment, since the scanning is performed by a worker while moving three-dimensional laser scanner 5 in the hand, the position of three-dimensional laser scanner 5 and its orientation direction necessary for acquiring the measurement data of the loss region are generated as a continuous moving trajectory.

The measurement parameter (for example, the required moving trajectory, measurement mode and the like) generated in this way is displayed on display 8 via information output section 7i. The position and range of the loss region may also be displayed together. A worker follows this display on display 8 for performing additional scanning.

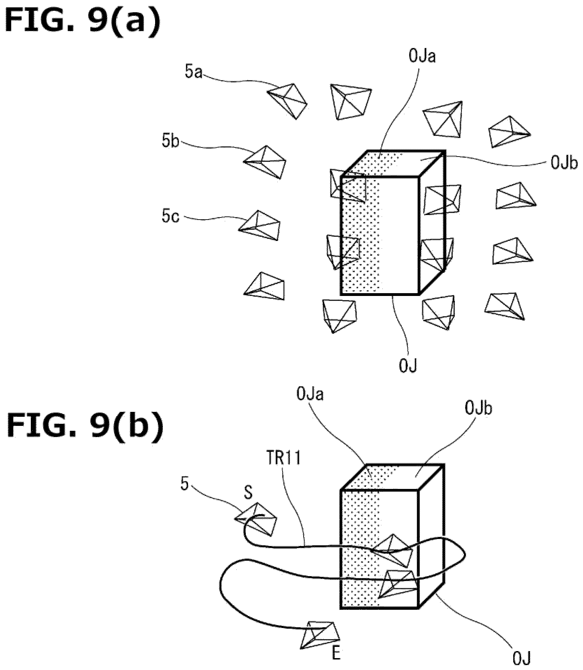

FIG. 9 is an illustrative view for explaining the principle of measurement parameter calculation in measurement parameter calculation section 7k. In FIG. 9 which is simplified, for example, the entire region that needs to be measured in engine room 1 mentioned above is shown as a measurement object OJ. Measurement object OJ includes a region OJa where measurement data has already been acquired and a loss region OJb where measurement data is lost. As shown in FIG. 9(a), first, measurement parameter calculation section 7k sets a plurality of virtual viewpoints around measurement object OJ. A square pyramid in the drawing schematically shows three-dimensional laser scanner 5, and the direction of the base of the square is the orientation direction of three-dimensional laser scanner 5. As indicated by reference symbols 5a, 5b, 5c..., a plurality of virtual viewpoints with different positions and orientation directions are set. In addition, when three-dimensional laser scanner 5 has two switchable measurement modes with different measurement depths, a virtual viewpoint is set for each of the modes. Next, for each of the virtual viewpoints, the quality of data acquisition for loss region OJb is evaluated. For example, the evaluation includes whether or not a target loss region can be seen linearly from the virtual viewpoints, whether or not the distance to the loss region is appropriate for measurement, and whether or not a plurality of loss regions can be measured at once.

Then, as shown in FIG. 9(b), a plurality of relatively advantageous virtual viewpoints with the same measurement mode are interpolated and connected into a single continuous line to generate a preferred moving trajectory TR11 of three-dimensional laser scanner 5 including the orientation direction. Here, it is performed under the condition that the direction of the orientation does not change abruptly. A reference symbol of "S" indicates the starting point of scanning, and a reference symbol of "E" indicates the end point. In addition, if the evaluation of the virtual viewpoints results in the need for additional scanning with a different measurement mode, a preferable moving trajectory is generated for each mode. Preferred moving trajectory TR11 generated in this way is displayed on display 8, for example, as an image including the direction of the orientation as shown in the drawing, as an indication trajectory for additional scanning.

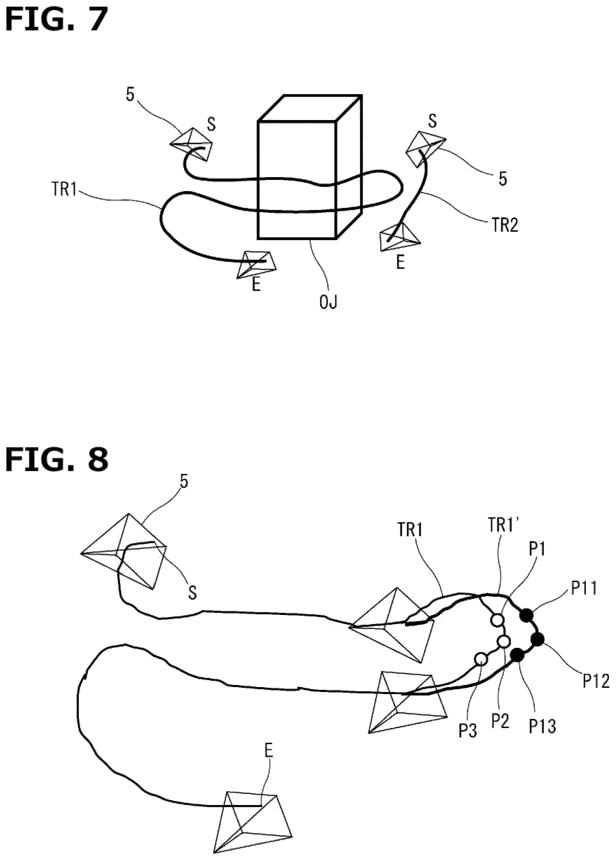

Moving trajectory determination section 7m estimates the moving trajectory of three-dimensional laser scanner 5 that a worker is scanning, based on the data acquired by three-dimensional laser scanner 5, and determines whether or not this moving trajectory deviates from the indicated indication trajectory. For example, as shown in FIG. 7, indication trajectories (trajectories along which a worker operates three-dimensional laser scanner 5) TR1 and TR2, including the direction of the orientation of three-dimensional laser scanner 5, are set in advance for specific measurement object OJ (which is simplified and shown in the drawing), such as an assembly in engine room 1, and a worker is given such instruction through a display on display 8 or printed material. The worker moves three-dimensional sensor 5 along indication trajectories TR1 and TR2 to perform scanning. In addition, indication trajectory TR1 is an indication trajectory of the scanning with measurement mode of three-dimensional laser scanner 5 as a first mode, and indicative trajectory TR2 is an indication trajectory TR2 of the scanning with measurement mode as a second mode. If the actual scanning operation performed by a worker is not performed along an indication trajectory, a loss region increases, and it is not preferable. Therefore, moving trajectory determination section 7m determines whether or not the actual moving trajectory deviates from an indication trajectory, and if there is a deviation, this information is reported to the worker to encourage him/her to correct the moving trajectory.

FIG. 8 is an illustrative view for explaining the principle of moving trajectory determination. Since the basic shape or configuration of a region to be a target of the scanning is known as design data acquired from database 6, it is possible to estimate the position of three-dimensional laser scanner 5 in space and its orientation direction based on the point group data sequentially acquired from three-dimensional laser scanner 5, and, in addition, it is possible to estimate the moving trajectory including the orientation direction of three-dimensional laser scanner 5. A moving trajectory TR1' estimated in this way is sequentially compared to indication trajectory TR1. For example, as shown in FIG. 8, the angle difference and distance difference of the vector pair connecting the two nearest neighbor points are obtained from the coordinate sequence of points P1, P2, P3... constituting indication trajectory TR1 and points P11, P12, P13... constituting moving trajectory TR1', and by comparing these, it is possible to determine the degree of matching between local indication trajectory TR1 and moving trajectory TR1'. As algorithms to determine the deviation of the moving trajectory, other known and suitable algorithms can be used.

Although warning and informing to a worker can be performed by display on display 8 or sound when the actual moving trajectory deviates from the indication trajectory, in one preferred embodiment, three-dimensional laser scanner 5 incorporates a vibrator, and by vibrating three-dimensional laser scanner 5 which is hand-held by the worker, warning and informing is performed to the worker. At this time, it is preferable that the vibrator generates vibrations with an intensity corresponding to the degree of the deviation as information to encourage correction. That is, three-dimensional laser scanner 5 starts to vibrate when the actual moving trajectory moves away from the indication trajectory during the scanning operation, and the further the moving trajectory is from the indication trajectory, the stronger the vibration becomes, and then becomes weaker as it gets closer to the indication trajectory. Therefore, even if the worker does not strictly know the indication trajectory in the space, scanning operation along the indication trajectory becomes easier.

Next, the operation of a clearance inspection device of the present invention will be explained based on the flowchart in FIG. 7.

First, in a step S1, by the operation of three-dimensional laser scanner 5 by a worker, a predetermined region within engine room 1 including ignition coil 3 and fuel tube 4 as target components is scanned from the outside, and point group data including part of the outer surface of each component is acquired. This scanning and the generation of the point group data gradually progress with the scanning operation.

Next, in a step S2, CAD data of ignition coil 3 and fuel tube 4 as target components and other components around them are acquired together with CAD data indicating their spatial positional relationship from database 6.

Then, in a step S3, by using a well-known suitable conversion method, the CAD data is converted to point group data.

Next, in a step S4, as first aligning section 7a mentioned above, rough alignment of the entire target region with the entire reference region is performed. As mentioned above, rough alignment of the point group data of the entire region including ignition coil 3, fuel tube 4 and other components with the point group data of the entire region including ignition coil, fuel tube and other components in the design data stored in database 6 is performed by searching for key points and a combination of paired key points.

After the rough alignment in step S4, in a step S5, as progress degree calculation section 7b, the scanning progress degree is calculated from the ratio of the number of points in the point group data of the region as reference to the number of matched points in the point group data of the scanned region.

Then, in a step S6, it is determined whether or not the progress degree exceeds a predetermined progress degree threshold value (for example, it is 40%). When the progress degree is equal to or less than the threshold value, the step proceeds to a step S7, and the progress degree is displayed on display 8, and the scanning by a worker is continued. That is, the process from step S1 is repeated.

Here, in step S8 following step S7, as moving trajectory determination section 7m mentioned above, the actual moving trajectory of three-dimensional laser scanner 5 by a worker is estimated, and further, in step S9, it is determined whether or not the estimated moving trajectory is along the correct indication trajectory. When it is along the indication trajectory, the step is returned to step S1, and the scanning is repeated. When the estimated moving trajectory deviates from the correct indication trajectory, that effect is reported to the worker in step S10 to encourage to correct the trajectory, and then the step is returned to step S1 to continue the scanning. As mentioned above, the reporting to the worker is preferably performed by a vibrator incorporated into three-dimensional laser scanner 5, which performs vibration with an intensity corresponding to the degree of deviation.

Therefore, basically, the process from steps S1 to S10 is repeated from the start of scanning until the progress degree reaches a predetermined progress degree threshold value. If it does not reach the progress degree threshold value even after passing through all of the indicative trajectories, it is necessary to perform a plurality of scanning along the same indicative trajectory.

When the progress degree exceeds the threshold value in step S6, the step proceeds to a step S11 from step S6, and the point group data of each of ignition coil 3 and fuel tube 4 as target components is extracted from the point group data of the measurement data and the point group data of the design data for the entire region. The point group data extracted from the measurement data is a so-called target, and the point group data extracted from the design data is so-called reference. The point group data of a target component as reference may be generated from CAD data of a single component.

Next, in a step S12, as second aligning section 7c, by using a well-known appropriate algorithm, the detailed alignment of ignition coil 3 and fuel tube 4 is performed. Here, fuel tube 4 is regarded as a rigid body. For example, as mentioned above, points that make a pair between the target point group data and the reference point group data which have gone through the rough alignment are searched, and the detailed alignment is performed such that the reference is closer to the target.

Next, the data of fuel tube 4 is down-sampled in a step S13, in order to perform the non-rigid-body alignment of fuel tube 4 that is a non-rigid body. Then, in a step S14, the non-rigid-body alignment in consideration of the deformation of fuel tube 4 is performed. That is, the reference point group data is aligned to a target position while deforming it. In the non-rigid-body alignment, as mentioned above, nearest neighbor pair is searched from the reference point group data and the target point group data, which are aligned when fuel tube 4 is regarded as a rigid boy as mentioned above, and rotation, expansion, and translation are obtained as parameters to bring them closer to each other.

Next, the step proceeds to a step S15, and the reliability degree of the alignment of each of ignition coil 3 and fuel tube 4 is calculated. The reliability degree is shown as the ratio of the number of points of the reference point group data and the number of points of the target point group data included within a range of a predetermined radius from each point of the reference point group data.

Then, in a step S16, it is determined whether or not the reliability degree of the alignment of ignition coil 3 and the reliability degree of the alignment of fuel tube4 each satisfy a predetermined reliability degree. When both of the reliability degrees satisfy the predetermined reliability degree, it is determined that the alignment is completed, and the step proceeds to a step S17.

In step S17, as first interpolation section 7f and second interpolation section 7g, the unscanned parts of the point group data of targets of ignition coil 3 and fuel tube 4 are interpolated with the point group data of the reference aligned to the targets. With this, the point group data of ignition coil 3 and fuel tube 4 which includes the unscanned parts (that is, hidden parts) at the respective target positions are generated.

Then, in a step S18, by using a well-known conversion method, for both of ignition coil 3 and fuel tube 4, the point group data including unscanned parts is converted to mesh data that constitutes a surface.

Next, in a step S19, as distance calculation section 7h, the minimum distance between ignition coil 3 and fuel tube 4 is calculated based on the mesh data of ignition coil 3 and the mesh data of fuel tube 4. That is, the distance between optional two points on the surfaces of them is obtained, and the minimum value among them is set as the minimum distance.

Then, in a step S20, inspection results including the minimum distance and other necessary information are displayed on display 8. Any alarm may be displayed when the calculated minimum distance is less than the threshold value by comparing the minimum distance to the threshold value.

On the other hand, when it is determined in step S16 that the reliability degree of the alignment is insufficient for any of the components, the step proceeds from step S16 to a step S21, and the determination of a loss region for a component with insufficient reliability degree is performed. As mentioned above, the surface to be scanned in the design data of each of the components is divided into a plurality of grids, the percentage of the point group which were scanned for each of the grids (ratio of the number of points to which the scanning has actually been performed to the number of points to be scanned) is acquired, and it is determined that a grid is a loss region when this ratio is less than a predetermined threshold value.

In addition, when the determination is NO in step S21, it means that the insufficiency of the reliability degree is not due to the loss region, and, for example, the target components are not recognized correctly, and some warning is displayed on display 8 and the process is ended. In this case, for example, the process starts over from the first scanning.

When it is determined in step S21 that there is a loss region (in other words, insufficient reliability degree is attributed to the loss region), the step proceeds from step S21 to a step S22, and, in order to acquire the data on the loss region, a plurality of virtual viewpoints are set around a target region (engine room 1) and the advantage of each of them is evaluated. Then, in a step S23, measurement parameters (moving trajectory, orientation direction, measurement mode and the like of three-dimensional laser scanner 5) required for additional scanning is calculated, and in a step S24, the worker is instructed that the additional scanning needs to be performed using these measurement parameters. This instruction is performed, for example, by display on display 8, voice or the like. It is desirable that the necessary moving trajectory calculated as parameters is displayed on the screen as an indicative trajectory for the additional scanning. Then, the step is returned from step S24 to step S1, the scanning is performed again. In addition, in the illustrated example, determination and correction of the moving trajectory in steps S8 to S10 are also performed at the time of the additional scanning. The additional scanning is continued until the reliability degree of the alignment satisfies a predetermined reliability degree (step S16) or until it is determined that there is no loss region (for example, less than a certain percentage) (step S17).

In this way, since, in the above embodiment, the determination of a loss region is performed for a part where data can be acquired if the scanning is performed properly, the measurement parameters necessary to acquire the data in the loss region are calculated, and a worker is encouraged to perform the additional scanning according to these measurement parameters, three-dimensional measurement data can be efficiently acquired. In addition, a decrease in various inspection accuracies caused by the existence of a loss region during the scanning can be suppressed. In particular, the loss region is determined only for a component with low reliability degree of the alignment, and the additional scanning is performed to fill in the loss region of the component, thereby making the additional scanning more efficient.

Furthermore, since the loss region is determined after the reference point group data is aligned with the target point group data, it is possible to more accurately determine which part of the target component is the loss region.

In the above embodiment, it is determined whether or not the moving trajectory of three-dimensional laser scanner 5 operated by a worker is along a predetermined indication trajectory, and the worker is encouraged to correct the trajectory to be along the indication trajectory. Thus, scanning becomes easier and more appropriate, and work time can be reduced.

As the above, although one embodiment in which the present invention is applied to a clearance inspection between ignition coil 3 and fuel tube 4 of a vehicle, the present invention is not limited to such a use and can be widely applied to inspections related to spatial arrangement states, such as the position and posture of target components in space in an assembly including a plurality of components. In addition, although, in the above embodiment, two components are set as target components for inspection of the distance between two components, the present invention can also be applied even if there is only one target component.

In addition, in the above embodiment, although an example where three-dimensional laser scanner 5 is hand-held by a worker has been explained, the present invention can also be applied to a case where a robot performs scanning with a three-dimensional sensor. In this case, additional scanning can be performed by controlling a robot arm according to the measurement parameters calculated to interpolate a loss region.

In addition, the three-dimensional sensor is not limited to three-dimensional laser scanner 5 in the above embodiment, and any type of three-dimensional sensors that can acquire and generate three-dimensional point group data can be used. Sensors such as a ToF type and triangulation methods such as stereo cameras, can be widely applied.

## Claims

1. A component inspection method for performing inspection related to a spatial arrangement state of one or a plurality of components as targets in an assembly formed by assembling a plurality of components, the method comprising:
acquiring a measurement data including a part of an outer surface of the target component by scanning a region including the target component from outside by a three-dimensional sensor;
acquiring a design data including an individual outer shape of the target component and a positional relationship of the target component within the assembly;
determining a loss region in the measurement data of the target component by comparing it with the design data of the target component;
determining a measurement parameter of the three-dimensional sensor which is suitable for acquiring the measurement data of the loss region; and
performing additional scanning according to the measurement parameter.

2. The component inspection method according to claim 1, the determination of the loss region is performed after aligning a point group data of the target component which is based on the design data with a point group data of the target component which is extracted from the measurement data.

3. The component inspection method according to claim 2, wherein the alignment is performed for each of a plurality of the components and a degree of reliability of the alignment is obtained for each of the components based on a number of corresponding points in a point group, and
wherein the determination of the loss region is performed to a target component whose reliability degree of the alignment is low.

4. The component inspection method according to claim 1, wherein quality of a data acquisition of the loss region when the data is acquired from a plurality of virtual viewpoints by the three-dimensional sensor is evaluated for each of the virtual viewpoints, and
wherein a trajectory connecting a plurality of advantageous virtual viewpoints and an angle of the three-dimensional sensor which is required at each of the virtual viewpoints are determined as measurement parameters.

5. The component inspection method according to claim 1, wherein a moving trajectory of the three-dimensional sensor during the scanning is estimated based on a data acquired by the three-dimensional sensor,
wherein it is determined whether or not the moving trajectory deviates from an indication trajectory, and
wherein an information to encourage correction of the moving trajectory is output when the moving trajectory deviates from the indication trajectory.

6. The component inspection method according to claim 5, wherein the estimation of the moving trajectory of the three-dimensional sensor, the determination of the deviation and the output of the information to encourage the correction are performed, while performing rough alignment to align a point group data of the region including the target component which is acquired by the scanning with a point group data of the region based on the design data using key points.

7. The component inspection method according to claim 5, wherein the three-dimensional sensor operated by a worker is equipped with a vibrator, and
wherein, as the information to encourage the correction, the vibrator generates vibrations with an intensity corresponding to a degree of the deviation.

8. The component inspection method according to claim 2, wherein a degree of progress of the scanning is obtained from a matching state of the two point group data in which rough alignment has been performed, and
wherein alignment of the target component is performed when the progress degree reaches a predetermined level.

9. A component inspection device for performing inspection related to a spatial arrangement state of one or a plurality of components as targets in an assembly formed by assembling a plurality of components, comprising:
a three-dimensional sensor configured to scan a region including the target component from outside;
a measurement data acquisition section configured to acquire a measurement data including a part of an outer surface of the target component by the scanning using the three-dimensional sensor;
a design data acquisition section configured to acquire, from a database, a design data including an individual outer shape of the target component and a positional relationship of the component within the assembly;
a loss region determination section configured to obtain a loss region in the measurement data of the target component by comparing it with the design data of the target component;
a measurement parameter calculation section configured to obtain a measurement parameter of the three-dimensional sensor which is suitable for acquiring the measurement data of the loss region; and
an information output section configured to output the measurement parameter to a worker for additional scanning.
